# EUROPÄISCHE PATENTSCHRIFT

(11) **EP 1 434 984 B1**
(45) Veröffentlichungstag und Bekanntmachung des Hinweises auf die Patenterteilung: **22.08.2012**
(21) Anmeldenummer: 02777175.7
(22) Anmeldetag: 21.09.2002
(51) Int. Cl.: G01N 23/04, G01N 23/08, G01V 5/00

(54) **Direkte und indirekte Bestimmung des Volumens von Sprengstoff in einem Behälter mittels Röntgentransmission in verschiedenen Untersuchungsebenen**
Direct and indirect determination of an explosive's volume in a container using X-ray transmission in different inspection planes
Détermination directe et indirecte du volume d'un explosif dans un contenant par transmission à rayons X dans des plans d'inspection différents

(30) Priorität: 05.10.2001 DE 10149254
(43) Veröffentlichungstag der Anmeldung: 07.07.2004
(73) Patentinhaber: Heimann Systems GmbH, 65205 Wiesbaden (DE)
(72) Erfinder: BENEKE, Knut, 55270 Ober-Olm (DE); NITTIKOWSKI, Jörg, 65329 Hohenstein-Holzhausen (DE); NAUMANN, Dirk, 64653 Lorsch (DE); RIES, Hermann, 65232 Taunusstein (DE); SIEDENBURG, Uwe, 55270 Essenheim (DE); MEDER, Claus, 64380 Rossdorf (DE); ULLRICH, Stefan, 66127 Saarbrücken-Klarenthal (DE)
(74) Vertreter: Thul, Hermann
(86) Internationale Anmeldenummer: PCT/EP2002/010629
(87) Internationale Veröffentlichungsnummer: WO 2003/031960

(56) Entgegenhaltungen:
- US-A- 5 125 015
- US-A- 5 712 926
- US-A- 6 088 423
- US-A- 6 163 591
- US-A1- 2002 071 520

## Beschreibung

### Technisches Gebiet

Die Erfindung betrifft ein Verfahren und eine Vorrichtung zur Detektion eines bestimmten Materials in einem Objekt, insbesondere in einem Gepäckstück, mittels elektromagnetischer Strahlen, bei dem die Intensitäten von nicht absorbierten Strahlen aus mindestens drei Strahlenebenen in zugeordneten Detektoranordnungen gemessen und ausgewertet werden.

Zur Inspektion von Objekten, beispielsweise zur Sicherheitsüberprüfung von Gepäckstücken auf Flughäfen, werden bekannterweise Verfahren und Vorrichtungen verwendet, bei denen das Objekt durch elektromagnetische Strahlen gefördert wird, die von ortsfesten Strahlenquellen abgegeben werden. Die Intensitäten der nicht absorbierten Strahlen werden von den Strahlenquellen zugeordneten Detektoranordnungen gemessen und ausgewertet. Üblicherweise erfolgt die Inspektion mit Röntgenstrahlen.

### Stand der Technik

Aus der US 6,088,423-A ist ein Verfahren bekannt, bei dem drei ortsfeste Strahlenquellen Röntgenstrahlen in drei zueinander parallelen Ebenen abgeben, die zur Transportrichtung senkrecht verlaufen. Aus den Daten der drei zugeordneten Detektoranordnungen bestimmt ein Computer wahrscheinliche Konturen der Gegenstände in dem Objekt und rechnet zu jedem Gegenstand eine wahrscheinliche effektive Ordnungszahl Z_{eff} und eine wahrscheinliche Dichte. Auf bekannte Weise werden im sogenannten Dual-Energy-Verfahren die Intensitäten zweier Energiebereiche ausgewertet.

### Darstellung der Erfindung

Der Erfindung liegt die Aufgabe zugrunde, ein Verfahren zur Detektion von Materialien in einem Objekt, insbesondere in einem Gepäckstück, bereitzustellen, das mit möglichst geringem apparativen Aufwand, insbesondere mit einer möglichst geringen Anzahl von Strahlenquellen, eine möglichst hohe Sicherheit bei der Detektion eines Materials bietet.

Eine weitere Aufgabe besteht darin, eine Vorrichtung zur Durchführung eines erfindungsgemäßen Verfahrens bereitzustellen.

Die erste Aufgabe wird mit den Merkmalen des Patentanspruchs 1, die zweite Aufgabe mit den Merkmalen des Patentanspruchs 13 gelöst.

Bekannte Computertomographen verwenden das Objekt umkreisende Röntgenquellen und zugeordnete Detektoren, um eine Vielzahl von Abbildern zu erzeugen, aus denen das Objekt mit guter Auflösung dreidimensional rekonstruiert wird. Mit einer geringen Anzahl von weniger als zehn Ansichten, die mit einer entsprechenden Anzahl feststehender Strahlenquellen und Detektoren erzeugt werden, ist ein komplexes Objekt aus mathematischen Gründen nicht vollständig und nicht mit ausreichender Auflösung zu rekonstruieren. Das erfindungsgemäße Verfahren beschränkt sich daher auf die Gewinnung partieller Informationen aus bestimmten Regionen, die aus Einzelansichten ausgewählt und weiter geprüft werden. Bei der Auswertung wird zunächst eine räumlich geometrische Größe in dem zu überprüfenden Gebiet aus Positionsdaten eines zweidimensionalen Bildes und aus Intensitätswerten unter Verwendung eines hinterlegten Wertes einer spezifischen, die Absorption beeinflussenden Größe eines vermuteten Materials bestimmt. Zusätzlich wird die entsprechende räumlich geometrische Größe allein aus drei-dimensionalen geometrischen Werten bestimmt, die aus gemessenen Intensitätswerten ermittelt werden. Anschließend werden die Werte aus beiden Auswertungen direkt oder indirekt miteinander verglichen, um festzustellen, ob das vermutete Material tatsächlich vorhanden ist.

Die Unteransprüche enthalten bevorzugte, da besonders vorteilhafte Varianten eines erfindungsgemäßen Verfahrens:

Das Verfahren nach Anspruch 2 vergleicht die beiden Werte der räumlich geometrischen Größe indirekt miteinander, indem unter Verwendung beider Werte der Wert einer spezifischen Materialgröße errechnet wird, der anschließend mit einem hinterlegten Wert verglichen wird.

Bei dem Verfahren nach Patentanspruch 3 wird das Volumen des Materials in dem Gebiet aus dem Flächeninhalt und der Absorptionsdicke des Gebietes bestimmt. Zur Berechnung der Absorptionsdicke aus den gemessenen Intensitätswerten wird der hinterlegte Wert der spezifischen, die Absorption beeinflussenden Größe eines vermuteten Materials verwendet, insbesondere die hinterlegte Dichte ϕ und/oder der hinterlegte Massenschwächungskoeffizient µ/ϕ. In einer zweiten Auswertung wird näherungsweise das Volumen des Materials in dem Gebiet allein aus räumlichen Positionsdaten ermittelt. Zum Vergleich werden die Werte der Volumen oder die Werte einer mit dem Volumen errechneten Größe miteinander verglichen.

In Patentanspruch 6 ist ein besonders vorteilhaftes Verfahren mit einem indirekten Vergleich beansprucht, das auf Patentanspruch 3 basiert. Aus dem aus dem Flächeninhalt und der Absorbtionsdicke bestimmten Volumen wird durch Multiplikation mit der hinterlegten Dichte eines vermuteten Materials die Masse bestimmt. Die so bestimmte Masse wird anschließend durch das Volumen dividiert, das ausschließlich aus räumlichen Positionsdaten ermittelt wurde. Der so errechnete Dichtewert wird mit einem hinterlegten Dichtewert verglichen.

Zur Approximation des Volumens wird bevorzugt das Volumen eines in dem zu überprüfenden Gebiet befindlichen oder das Gebiet umhüllenden Polyeders errechnet (Patentanspruch 7).

Bei dem Verfahren nach Patentanspruch 8 wird die einer Position des zweidimensionalen Bildes zugeordnete Absorptionsdicke unter Verwendung eines hinterlegten Wertes einer die Absorption beeinflussenden Größe, insbesondere der Dichte ϕ und/oder des Massenschwächungskoeffizienten µ/ϕ, bestimmt. Zur Verifikation des Auswerteergebnisses wird die entsprechende Dicke zusätzlich allein aus räumlichen Positionsdaten bestimmt.

Bei dem besonders vorteilhaften Verfahren nach Patentanspruch 11 wird das Objekt in zumindest drei getrennten Strahlenebenen durchleuchtet, von denen zumindest zwei nicht parallel zueinander verlaufen. Bei nur wenigen zwei-dimensionalen Abbildern des Objektes läßt sich das zu überprüfende räumliche Gebiet besser definieren und abgrenzen, wenn die Ansichten möglichst unabhängig voneinander sind, also nicht aus ausschließlich parallelen Durchleuchtungsebenen gewonnen werden.

### Kurze Beschreibung der Zeichnung

Die Zeichnung dient zur Erläuterung der Erfindung anhand eines schematisch dargestellten Ausführungsbeispiels einer Gepäckprüfanlage. Dabei zeigen:

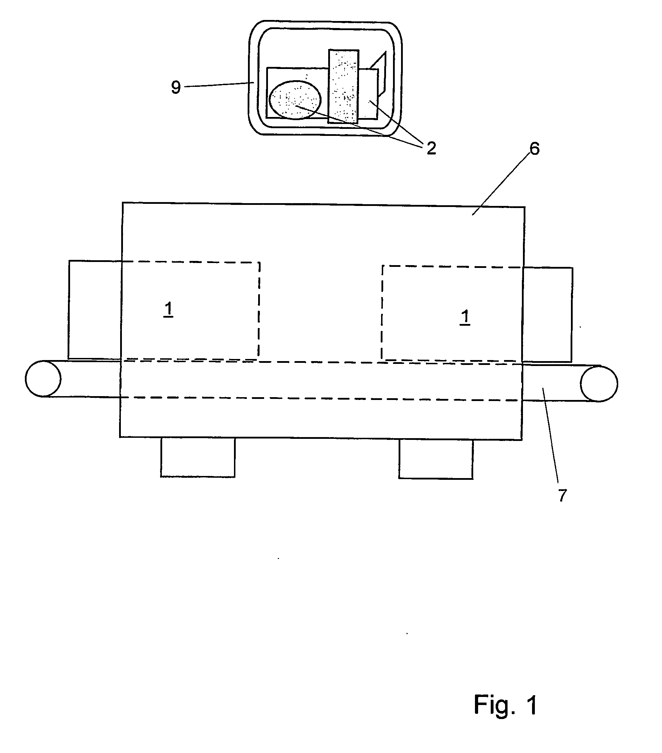

- Figur 1: den prinzipiellen Aufbau der Vorrichtung,

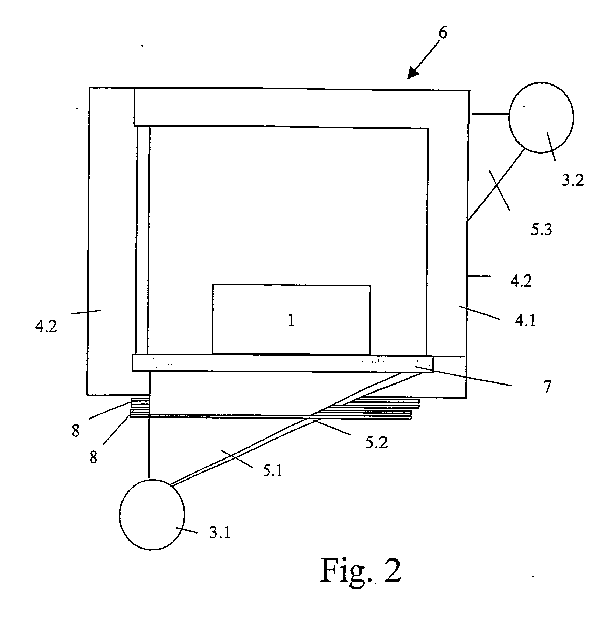

- Figur 2: eine Vorderansicht einer Vorrichtung, die das Objekt in drei Strahlenebenen durchleuchtet,
- Figur 3: in einer Seitenansicht die Anordnung der Strahlenquellen und Detektoren der Vorrichtung nach Figur 2,
- Figur 4: die Vorderansicht einer bevorzugten Vorrichtung, bei der das Objekt in fünf Strahlenebenen durchleuchtet wird, und
- Figur 5: in einer Seitenansicht die Anordnung der Strahlenquellen und Detektoren bei der Vorrichtung nach Figur 4.

### Wege zur Ausführung der Erfindung

Die in den Figuren dargestellte Inspektionsvorrichtung dient zur Sicherheitsüberprüfung von Objekten 1, insbesondere von Gepäckstücken, wie sie auf Flughäfen durchgeführt wird. Dazu müssen in den Gepäckstücken befindliche Gegenstände 2 hinsichtlich ihrer Sicherheitsrelevanz geprüft werden.

Die Vorrichtung enthält als wesentliche Bestandteile ortsfeste Strahlenquellen 3.1- 3.3 und zugeordnete Detektoranordnungen 4.1 - 4.5, von denen und die Intensitäten der nicht absorbierten Strahlen gemessen werden. Die Strahlenquellen 3.1 - 3.3 sind dabei so angeordnet, daß die Objekte 1 jeweils in verschiedenen Richtungen durchleuchtet werden, um möglichst viele voneinander unabhängige Daten zu erhalten. Dazu sind die Strahlenquellen 3.1 - 3.3 in Transportrichtung der Objekte 1 mit Abstand hintereinander und an verschiedenen Seiten des Strahlentunnels 6 angeordnet, durch den die Objekte 1 von einer Transporteinrichtung, vorzugsweise einem Bandförderer 7, transportiert werden.

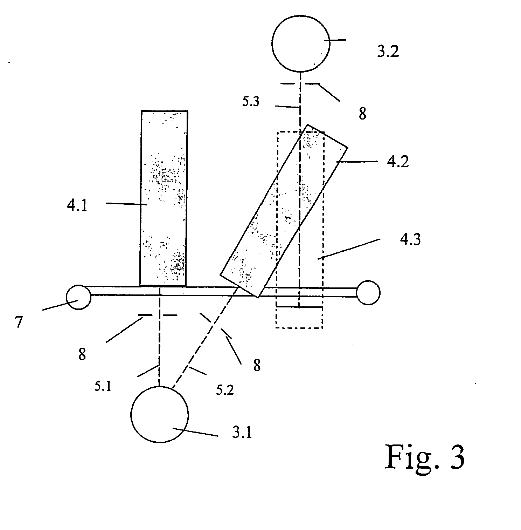

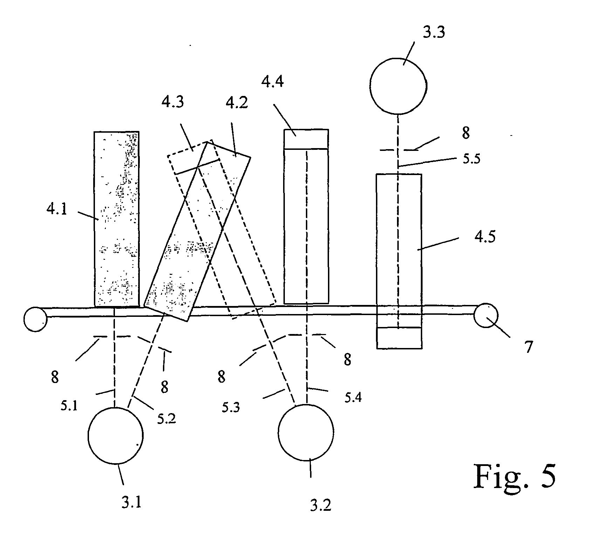

Es werden Strahlen in mindestens drei bevorzugt fächerförmigen Strahlenebenen 5.1 - 5.5 zur Durchleuchtung eines Objektes 1 abgegeben, auf die jeweils eine Detektoranordnung 4.1 - 4.5 ausgerichtet ist. Bevorzugt wird ein Objekt 1 in zumindest drei getrennten Strahlenebenen 5.1 - 5.5 durchleuchtet, von denen zumindest zwei nicht parallel zueinander verlaufen. Bei der Ausführungsform in Figur 3 verlaufen die Strahlenebenen 5.1, 5.3 nicht parallel zur Strahlenebene 5.2, in der Ausführungsform nach Figur 5 verlaufen die Strahlenebenen 5.1, 5.4, 5.5 parallel, die beiden anderen Strahlenebenen 5.2, 5.3 sowohl gegeneinander, als auch gegen die Strahlenebenen 5.1, 5.4, 5.5 geneigt. Zumindest eine Strahlenebene verläuft bevorzugt senkrecht zur Transportrichtung der Objekte 1.Vorteilhafterweise werden zwei zueinander geneigt verlaufende Strahlenebenen durch Ausblendung der entsprechenden Strahlen aus einer einzigen Strahlenquelle mittels Kollimatoren 8 festgelegt. Die Detektoranordnungen 4.1 - 4.5 enthalten jeweils Detektoren in einer zeilenförmigen Anordnung, die bevorzugt L-förmig gestaltet ist, damit alle das Objekt 1 durchdringenden Strahlen detektiert werden. Die Strahlenquellen 3.1 - 3.3 geben Röntgenstrahlen in einem Energiebereich bis maximal 140 keV ab. Die Detektoranordnungen 4.1 - 4.5 enthalten Doppeldetektoren, die für das sogenannte Dual-Energy-Verfahren die Intensitäten getrennt nach hohen und niedrigen Energien messen.

Weiterhin enthält die Vorrichtung eine Auswerteeinheit mit einem Computer und einem Bildschirm 9, auf dem die erzeugten Bilder der Objekte 1 und der darin befindlichen Gegenstände 2 für eine zusätzliche visuelle Prüfung durch eine Bedienperson angezeigt werden. In dem Computer sind neben der Auswertesoftware Werte zumindest einer spezifischen, die Absorption beeinflussenden Größe von verschiedenen Materialien hinterlegt, deren Anwesenheit detektiert werden soll. Derartige Materialien sind insbesondere Sprengstoffe, deren Anwesenheit in dem Objekt 1 detektiert werden soll.

Um ein bestimmtes Material, beispielsweise einen Sprengstoff, in einem Objekt 1 zu detektieren, wird dieses auf dem Bandförderer 7 durch die verschiedenen Strahlenebenen 5.1 - 5.5 gefördert, wobei die Intensitäten der nicht absorbierten Röntgenstrahlung von den jeweiligen Detektoranordnungen 4.1 - 4.5 gemessen werden. Aus den gemessenen Intensitätswerten wird zunächst zumindest ein zwei-dimensonales Bild des Objektes 1 erstellt, das im Computer zur weiteren Verarbeitung gespeichert wird. Das Bild baut sich aus Pixelwerten einer Materialgröße auf, die aus den Intensitäten der jeweiligen Detektoren bestimmt werden. Bevorzugt wird für jeden Bildpunkt der Wert der effektiven Ordnungszahl Z_{eff} bestimmt, der nach den bekannten Dual-Energy-Verfahren jeweils aus den beiden Intensitätswerten für das hohe und niedrige Energiespektrum ermittelt wird. Der ermittelte Wert kann auf dem Bildschirm 9 als zugeordneter Grau- oder Farbwert dargestellt werden.

Auf dem Bild werden nun die Bereiche bestimmt, in denen der Wert der Materialgröße, im Beispiel der Wert von Z_{eff}, in einem interessierenden Bereich liegt, beispielsweise sich in einem Wertebereich von Sprengstoffen befindet. Dieser Bereich des Bildes stellt ein Abbild eines räumlichen Gebietes und somit eines Gegenstandes 2 innerhalb des Objektes 1 dar, und wird zur weiteren Überprüfung ausselektiert.

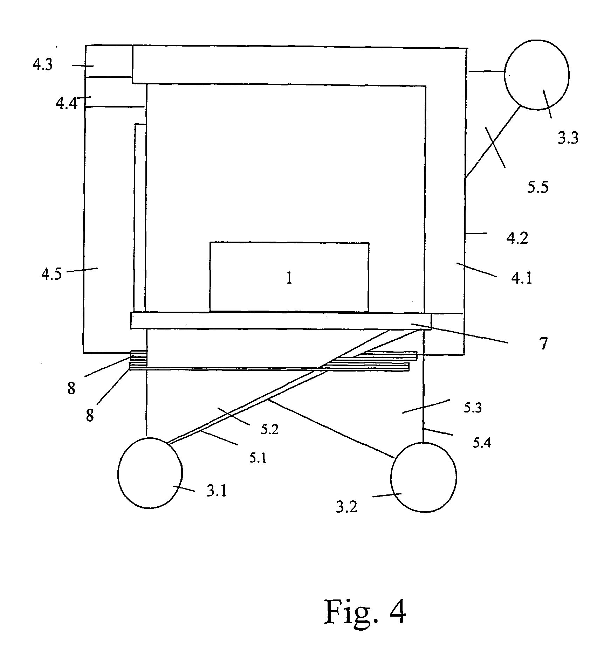

Bei der Überprüfung wird zumindest eine räumlich geometrische Größe in dem zu überprüfenden Gebiet aus Positionsdaten eines zwei-dimensionalen Bildes und aus Intensitätswerten bestimmt, die unter Verwendung eines hinterlegten Wertes einer spezifischen, die Absorption beeinflussenden Größe eines vermuteten Materials ermittelt werden. Bevorzugt werden die Werte der Dichte ϕ und/oder des Massenschwächungskoeffizienten µ/ϕ der zu detektierenden Materialien hinterlegt und verwendet. Zusätzlich wird die entsprechende räumlich geometrische Größe allein aus drei-dimensonalen Werten bestimmt, die aus gemessenen Intensitätswerten ermittelt werden. Um diese räumlich-geometrische Größe möglichst genau zu bestimmen, werden bei der bevorzugten Ausführungsform nach den Figuren 4 und 5 fünf verschiedene zweidimensionale Bilder erzeugt, aus denen die entsprechenden drei-dimensionalen Werte errechnet werden. Abschließend werden die beiden ermittelten Werte der räumlich geometrischen Größe oder von Werten einer aus der räumlich geometrischen Größe abgeleiteten Größe direkt oder indirekt miteinander verglichen, um festzustellen, ob das vermutete Material tatsächlich vorhanden ist.

Eine vorteilhafte räumlich geometrische Größe ist das Volumen des Materials in dem zu überprüfenden räumlichen Gebiet. Das Volumen wird auf zwei verschiedenen Wegen bestimmt: Bei der ersten Bestimmung wird zunächst der Flächeninhalt des zweidimensionalen Abbildes des zu überprüfenden Gebietes berechnet. Anschließend wird die Absorptionsdicke des räumlichen Gebietes aus Intensitätswerten von Strahlen bestimmt, die die Fläche durchdrungen haben. Zur Bestimmung der Absorptionsdicke wird ein hinterlegter Wert einer spezifischen, die Absorption beeinflussenden Größe eines vermuteten Materials herangezogen, insbesondere die Dichte ϕ und/oder der Massenschwächungskoeffizient µ/ϕ. Man erhält dann das Volumen des Materials in dem Gebiet als Produkt aus Flächeninhalt und Absorptionsdicke.

In einem weiteren Schritt wird näherungsweise das Volumen des Materials in dem Gebiet aus räumlichen Positionsdaten ermittelt, die allein aus den Intensitätswerten von mindestens drei Detektoranordnungen bestimmt werden. Dazu wird bevorzugt das Volumen eines sich in dem Gebiet befindlichen oder das Gebiet umhüllenden Polyeders aus Positionsdaten errechnet, die als Intensitätswerte beim Transport des Objektes 1 durch zumindest drei Strahlenebenen bestimmt werden.

Zur Überprüfung, ob das vermutete Material tatsächlich vorhanden ist, werden anschließend nach einer Variante die Werte der Volumen oder die Werte einer mit dem Volumen errechneten Größe direkt miteinander verglichen, die nach den beiden Verfahren ermittelt wurden. Bevorzugt wird zum Vergleichen in beiden Verfahren jeweils die Masse des Materials in dem zu überprüfenden Gebiet als Produkt aus dem Volumen und der hinterlegten Dichte ermittelt. Dies hat den Vorteil, daß in dem ersten Schritt eine minimale Masse festgelegt werden kann, die für eine Überprüfung in dem zweiten Schritt erforderlich ist.

Bevorzugt wird ein indirekter Vergleich der in beiden Verfahren ermittelten Volumen so durchgeführt, daß der unter Verwendung der Absorbtionsdicke im ersten Schritt errechnete Volumenwert mit dem hinterlegten Dichtewert ϕ des vermuteten Materials multipliziert wird, um die Masse des Materials in dem zu überprüfenden Gebiet zu bestimmen. Aus der so bestimmten Masse wird durch Division durch den im zweiten Verfahren allein aus räumlichen Positionsdaten ermittelten Volumenwert ein Dichtewert bestimmt, der anschließend mit einem hinterlegten Dichtewert verglichen wird. Auch dieses Verfahren hat den Vorteil, daß in einem ersten Schritt eine Masse errechnet wird, von der ein minimaler Wert für die Fortsetzung des Prüfverfahrens festgelegt werden kann.

Falls das vermutete Material vorliegt, stimmen die Vergleichwerte sowohl beim direkten, als auch beim indirekten Verfahren ausreichend genau überein.

Alternativ zur Bestimmung des Volumens kann auch die Absorptionsdicke des Gebietes als geometrische Größe bestimmt werden. Dazu wird die einer Position des zweidimensionalen Bildes zugeordnete Absorptionsdicke unter Verwendung eines hinterlegten Wertes der spezifischen, die Absorption beeinflussende Größe eines vermuteten Materials bestimmt. Vorzugsweise werden - wie bei der vorstehend beschriebenen Volumenbestimmung - Werte der Dichte ϕ und/oder der Massenschwächungskoeffizienten µ/ϕ von zu detektierenden Materialien hinterlegt. Die Absorptionsdicke wird bevorzugt unter der Annahme berechnet, daß das Material in dem Gebiet eine bestimmte Dichte aufweist.

Zusätzlich wird die diesem Punkt zugeordnete Absorptionsdicke allein aus räumlichen Positionsdaten bestimmt, die durch eine drei-dimensionale Auswertung von zumindest drei zwei-dimensionalen Bildern aus verschiedenen Strahlenebenen 5.1 - 5.5 ermittelt werden. Zum Schluß werden die beiden ermittelten Dicken oder daraus abgeleitete Größen, beispielsweise die Dichten oder die Massen, miteinander verglichen. Falls das vermutete Material vorliegt, stimmen die beiden Werte ausreichend genau überein.

## Patentansprüche

1. Verfahren zur Detektion eines bestimmten Materials in einem Objekt (1), insbesondere in einem Gepäckstück, mittels elektromagnetischer Strahlen, bei dem die Intensitäten von nicht absorbierten Strahlen aus mindestens drei Strahlenebenen (5.1 - 5.2) in zugeordneten Detektoranordnungen (4.1 - 4.5) gemessen und ausgewertet werden, mit folgenden Verfahrensschritten:
1. Erstellen zumindest eines zwei-dimensionalen Bildes des Objektes (1) aus den gemessenen Intensitätswerten,
2. Selektion eines auf dem Bild abgebildeten räumlichen Gebietes auf Grundlage des Wertes einer Materialgröße, der aus Intensitätsmessungen bestimmt wird, zur Überprüfung,
3. Bestimmung zumindest einer räumlich geometrischen Größe in dem zu überprüfenden Gebiet aus Positionsdaten eines zwei-dimensionalen Bildes und aus Intensitätswerten unter Verwendung eines hinterlegten Wertes einer spezifischen, die Absorption beeinflussenden Größe eines vermuteten Materials,
4. zusätzliche Bestimmung der entsprechenden räumlich geometrischen Größe allein aus drei-dimensionalen geometrischen Werten, die aus gemessenen Intensitätswerten ermittelt werden,
5. direktes oder indirektes Vergleichen der in den Schritten 3 und 4 bestimmten Werte der räumlich geometrischen Größe oder von Werten einer daraus abgeleiteten Größe, um festzustellen, ob das vermutete Material tatsächlich vorhanden ist.

2. Verfahren nach Anspruch 1, **dadurch gekennzeichnet, daß** ein indirekter Vergleich so durchgeführt wird, daß unter Verwendung beider Werte der räumlich geometrischen Größe aus den Schritten 3 und 4 der Wert einer speziellen Materialgröße errechnet wird, der anschließend mit einem hinterlegten Wert verglichen wird.

3. Verfahren nach Anspruch 1 oder 2 , **dadurch gekennzeichnet, daß**
• in Schritt 3 der Flächeninhalt des Abbildes des zu überprüfenden Gebietes berechnet wird, und anschließnd als räumlich geometrische Größe das Volumen des Materials in dem Gebiet aus dem Flächeninhalt und der Absorbtionsdicke des Gebietes bestimmt wird, wobei die Absorptionsdicke aus gemessenen Intensitätswerten und dem hinterlegten Wert der spezifischen, die Absorption beeinflussenden Größe eines vermuteten Materials bestimmt wird,
• unter Schritt 4 näherungsweise das Volumen des Materials in dem Gebiet aus räumlichen Positionsdaten ermittelt wird, die aus den Intensitätswerten der mindestens drei Detektoranordnungen (4.1 - 4.5) bestimmt werden.

4. Verfahren nach Anspruch 3, **dadurch gekennzeichnet, daß** in Schritt 5 die Werte der Volumen oder die Werte einer mit dem Volumen errechneten Größe miteinander verglichen werden.

5. Verfahren nach Anspruch 4, **dadurch gekennzeichnet, daß** die Massewerte miteinander verglichen werden, die durch Multiplikation der Volumenwerte mit dem Dichtewert errechnet wurden, der hinterlegt oder aus der hinterlegten Größe bestimmt wurde.

6. Verfahren nach Anspruch 3, **dadurch gekennzeichnet, daß** in Schritt 3 zum Abschluß aus dem Volumen des Materials und der hinterlegten Dichte die Masse des Materials in dem Gebiet berechnet wird und unter Schritt 5 für einen indirekten Vergleich die Dichte aus der in Schritt 3 bestimmten Masse und dem in Schritt 4 bestimmten Volumen berechnet und mit einem hinterlegten Wert der Dichte verglichen wird.

7. Verfahren nach einem der Ansprüche 3 bis 6, **dadurch gekennzeichnet, daß** zur Approximation des Volumens in Schritt 4 das Volumen eines in dem Gebiet befindlichen oder das Gebiet umhüllenden Polyeders aus Positionsdaten errechnet wird, die aus Intensitätswerten von zumindest drei Detektoranordnungen ermittelt werden.

8. Verfahren nach Anspruch 1, **dadurch gekennzeichnet, daß**
• in Schritt 3 eine einer Position des zwei-dimensionalen Bildes zugeordnete Absorptionsdicke des Gebietes unter Verwendung eines hinterlegten Wertes der spezifischen, die Absorption beeinflussenden Größe eines vermuteten Materials bestimmt wird,
• in Schritt 4 die entsprechende Dicke des Gebietes aus räumlichen Positionsdaten bestimmt wird, die allein aus Intensitätswerten von zumindest drei Detektoranordnungen (4.1 -4.5) ermittelt wurden, und
• in Schritt 5 die beiden ermittelten Dicken oder daraus abgeleitete Größen miteinander verglichen werden.

9. Verfahren nach einem der Ansprüche 1 bis 7, **dadurch gekennzeichnet, daß** die der Selektion in Schritt 2 zugrundeliegende Materialgröße die effektive Ordnungszahl Z_{eff} ist.

10. Verfahren nach einem der Ansprüche 1 bis 9, **dadurch gekennzeichnet, daß** die hinteriegte materialspezifische, die Absorption beeinflussende Größe in Schritt 3 die Dichte ϕ und/oder der Massenschwächungskoeffizient µ/ϕ ist.

11. Verfahren nach einem der Ansprüche 1 bis 10, **dadurch gekennzeichnet, daß** das Objekt (1) in zumindest drei getrennten Strahlenebenen (5.1- 5.5) durchleuchtet wird, von denen zumindest zwei nicht parallel zueinander verlaufen.

12. Verfahren nach Anspruch 11, dadurch gekannzetchnet, daß das Objekt (1) zur Durchleuchtung durch die Strahlenebenen (5,1 - 5.5) gefördert wird.

13. Vorrichtung zur Durchführung eines Vetfahrens gemäß einem der Ansprüche 1 bis 12
- mit einer durch einen Strahlentunnel (6) führenden Transporteinrichtung (7),
- um die Transporteinrichtung (7) angeordnete Strahlenquellen (3.1- 3-3), die Strahlen in zumindest drei Strahlenebenen (5.1- 5.5) abgeben, wobei zumindest zwei- der Strahklenebenen (5.1- 5.5) nicht parallel zueinander verlaufen,
- mit jeweils einer jeder Strahlenebene (5.1- 5.5) zugeordneten und auf diese ausgerichtete Detektoranurdnung (4.1 4.5) und
- mit einer Auswerteeinheit,
**dadurch gekennzeichnet, daß** die Auswarteeinheit folgende Mittel enthält
1. Mittel zum Erstellen zumindest eines zwei-dimensionalen Bildes des Objektes (1) aus den gemessenen Intensitätswerten,
2. Mittel zur Selektion eines auf dem Bild abgebildeten räumlichen Gebietes auf Grundlage des Wertes einer Materialgröße, der aus intensitätsmessungen bestimmt wird, zur Überprüfung.
3. Mittel zur Bestimmung zumindest einer räumlich geometrischen Größe in dem zu überprüfenden Gebiet aus Positionsdaten eines zwei-dimensionalen Bildes und aus Intensitätswerten unter Verwendung eines hinterlegten Wertes einer spezifischen, die Absorption beeinflussenden Größe eines vermuteten Materials,
4. Mittel zur zusätzlichen Bestimmung der entsprechenden räumlich geometrischen Größe allein aus drei-dimensionalen geometrischen Werten, die aus gemessenen Intensitätswerten ermittelt werden und
5. Mittel zum direkten oder indirekten Vergleichen der in den Schritten 3 und 4 bestimmten Werte der räumlich geometrischen Größe oder von Werten einer daraus abgeleiteten Größe, um festzustellen, ob das vermutete Material tatsächlich vorhanden ist.

## Claims

1. A method for detecting a specific material in an object (1), in particular in a piece of luggage, by means of electromagnetic beams, in which the intensities of non-absorbed beams from at least three beam planes (5.1 - 5.2) are measured and analysed in assigned detector arrays (4.1 - 4.5), having the following method steps:
1. preparing at least a two dimensional image of the object (1) from the measured intensity values,
2. selecting a spatial region mapped on the image based on the value of a material variable, which is determined from intensity measurements, for examination,
3. determining at least one spatial geometric variable in the region to be examined from position data of a two-dimensional image and from intensity values using a stored value of a specific variable of a suspected material which influences the absorption,
4. additionally determining the corresponding spatial geometric variable solely from three-dimensional geometric values which are ascertained from measured intensity values,
5. directly or indirectly comparing the values, determined in steps 3 and 4, of the spatial geometric variable or values of a variable derived therefrom in order to establish whether the suspected material is actually present.

2. Method according to Claim 1,
**characterized in that** an indirect comparison is carried out so that, using both values of the spatial geometric variable from steps 3 and 4, the value of a special material variable is calculated, which is subsequently compared to a stored value.

3. Method according to Claim 1 or 2, **characterized in that**
- in step 3, the surface area of the map of the region to be examined is calculated, and subsequently, as the spatial geometric variable, the volume of the material in the region is determined from the surface area and the absorption thickness of the region, wherein the absorption thickness is determined from measured intensity values and the stored value of the specific variable of a suspected material which influences the absorption,
- in step 4, the volume of the material in the region is approximately ascertained from spatial position data which are determined from intensity values of the at least three detector arrays (4.1 - 4.5).

4. Method according to Claim 3,
**characterized in that**, in step 5, the values of the volume or the values of a variable calculated using the volume are compared to one another.

5. Method according to Claim 4,
**characterized in that** the mass values are compared to one another, which were calculated by multiplication of the volume values with the density value, which was stored or was determined from the stored variable.

6. Method according to Claim 3,
**characterized in that**, in step 3, the mass of the material in the region is calculated at the conclusion from the volume of the material and the stored density, and in step 5, for an indirect comparison, the density is calculated from the mass determined in step 3 and the volume determined in step 4 and compared to a stored value of the density.

7. Method according to one of Claims 3 to 6,
**characterized in that**, to approximate the volume in step 4, the volume of a polyhedron, which is located in the region or encloses the region, is calculated from position data, which are ascertained from intensity values of at least three detector arrays.

8. Method according to Claim 1,
**characterized in that**
- in step 3, an absorption thickness, which is assigned to a position of the two-dimensional image, of the region is determined using a stored value of the specific variable of a suspected material which influences the absorption,
- in step 4, the corresponding thickness of the region is determined from spatial position data, which were solely ascertained from intensity values of at least three detector arrays (4.1 - 4.5), and
- in step 5, the two ascertained thicknesses or variables derived therefrom are compared to one another.

9. Method according to one of Claims 1 to 7, **characterized in that** the material variable on which the selection in step 2 is based is the effective atomic number Z_{eff}.

10. Method according to one of Claims 1 to 9, **characterized in that** the stored material-specific variable which influences the absorption in step 3 is the density ϕ and/or the mass attenuation coefficient µ/ϕ.

11. Method according to one of Claims 1 to 10, **characterized in that** the object (1) is x-rayed in at least three separate beam planes (5.1 - 5.5), at least two of which do not extend parallel to one another.

12. Method according to Claim 11,
**characterized in that** the object (1) is conveyed through the beam planes (5.1 - 5.5) for the x-raying.

13. Device for carrying out a method according to one of Claims 1 to 12,
- having a transport device (7) leading through a beam tunnel (6),
- beam sources (3.1 - 3.3) arranged around the transport device (7), which emit beams in at least three beam planes (5.1 - 5.5), wherein at least two of the beam planes (5.1 - 5.5) do not extend parallel to one another,
- having a detector array (4.1 - 4.5) respectively assigned to each beam plane (5.1 - 5.5) and oriented thereon, and
- having an analysis unit,
**characterized in that** the analysis unit contains the following means:
1. means for preparing at least one two-dimensional image of the object (1) from the measured intensity values,
2. means for selecting a spatial region mapped on the image on the basis of the value of a material variable, which is determined from intensity measurements, for examination,
3. means for determining at least one spatial geometric variable in the region to be examined from position data of a two-dimensional image and from intensity values using a stored value of a specific variable of a suspected material which influences the absorption,
4. means for additionally determining the corresponding spatial geometric variable solely from three-dimensional geometric values which are ascertained from measured intensity values, and
5. means for directly or indirectly comparing the values, determined in steps 3 and 4, of the spatial geometric variable or values of a variable derived therefrom to establish whether the suspected material is actually present.

## Revendications

1. Procédé de détection d'un matériau donné dans un objet (1), notamment dans un paquet, au moyen de rayons électromagnétiques, dans lequel les intensités des rayons non absorbés provenant d'au moins trois plans de rayon (5.1 - 5.2) sont mesurées dans des arrangements de détecteurs (4.1 - 4.5) associés puis interprétées, comprenant les étapes suivantes :
1. Création d'au moins une image bidimensionnelle de l'objet (1) à partir des valeurs d'intensité mesurées,
2. Sélection d'une région de l'espace représentée sur l'image en se basant sur la valeur d'une grandeur de matériau qui est déterminée à partir des mesures des intensités en vue de la contrôler,
3. Détermination d'au moins une grandeur géométrique dans l'espace dans la région à contrôler à partir des données de position d'une image bidimensionnelle et à partir des valeurs des intensités en utilisant une valeur mémorisée d'une grandeur spécifique d'un matériau supposé qui influence l'absorption,
4. Détermination en plus de la grandeur géométrique dans l'espace correspondante uniquement à partir des valeurs géométriques tridimensionnelles qui sont déterminées à partir des valeurs mesurées des intensités,
5. Comparaison directe ou indirecte des valeurs déterminées aux étapes 3 et 4 de la grandeur géométrique dans l'espace ou des valeurs d'une grandeur qui en est dérivée afin de définir si le matériau supposé est réellement présent.

2. Procédé selon la revendication 1, **caractérisé en ce qu'**une comparaison indirecte est effectuée, de sorte que la valeur d'une grandeur de matériau spéciale est calculée en utilisant les deux valeurs de la grandeur géométrique dans l'espace des étapes 3 et 4, laquelle est ensuite comparée avec une valeur mémorisée.

3. Procédé selon la revendication 1 ou 2, **caractérisé en ce que**
* dans l'étape 3, la superficie de la représentation de la région à contrôler est calculée et le volume du matériau dans la région est ensuite déterminé en tant que grandeur géométrique dans l'espace à partir de la superficie et de l'épaisseur d'absorption de la région, l'épaisseur d'absorption étant déterminée à partir des valeurs mesurées des intensités et de la valeur mémorisée de la grandeur spécifique d'un matériau supposé qui influence l'absorption,
* à l'étape 4, le volume du matériau dans la région est déterminé de façon approximative à partir des données de position dans l'espace, lesquelles sont déterminées à partir des valeurs des intensités des au moins trois arrangements de détecteurs (4.1 - 4.5).

4. Procédé selon la revendication 3, **caractérisé en ce que** dans l'étape 5, les valeurs des volumes ou les valeurs d'une grandeur calculée avec les volumes sont comparées entre elles.

5. Procédé selon la revendication 4, **caractérisé en ce que** les valeurs des masses sont comparées entre elles, lesquelles ont été calculées en multipliant les valeurs des volumes par la valeur de la densité, laquelle est mémorisée ou a été déterminée à partir de la grandeur mémorisée.

6. Procédé selon la revendication 3, **caractérisé en ce qu'**à l'étape 3, pour terminer, la masse du matériau dans la région est calculée à partir du volume du matériau et de la densité mémorisée et à l'étape 5, pour une comparaison indirecte, la densité est calculée à partir de la masse déterminée à l'étape 3 et du volume déterminé à l'étape 4 et comparée avec une valeur mémorisée de la densité.

7. Procédé selon l'une des revendications 3 à 6, **caractérisé en ce que** pour l'approximation du volume à l'étape 4, le volume d'un polyèdre qui se trouve dans la région ou qui enveloppe la région est calculé à partir des données de position qui ont été déterminées à partir des valeurs des intensités d'au moins trois arrangements de détecteurs.

8. Procédé selon la revendication 1, **caractérisé en ce que**
* à l'étape 3 est déterminée une épaisseur d'absorption de la région, associée à une position de l'image bidimensionnelle, en utilisant une valeur mémorisée de la grandeur spécifique d'un matériau supposé qui influence l'absorption,
* à l'étape 4, l'épaisseur correspondante de la région est déterminée à partir des données de position dans l'espace qui ont été déterminées uniquement à partir des valeurs des intensités d'au moins trois arrangements de détecteurs (4.1 - 4.5), et
* à l'étape 5, les deux épaisseurs déterminées ou les grandeurs qui en sont dérivées sont comparées entre elles.

9. Procédé selon l'une des revendications 1 à 7, **caractérisé en ce que** la grandeur de matériau sur laquelle se base la sélection à l'étape 2 est le numéro atomique effectif Z_{eff}.

10. Procédé selon l'une des revendications 1 à 9, **caractérisé en ce que** la grandeur spécifique au matériau mémorisée qui influence l'absorption à l'étape 3 est la densité ϕ et/ou le coefficient d'atténuation massique µ/ϕ

11. Procédé selon l'une des revendications 1 à 10, **caractérisé en ce que** l'objet (1) est radiographié dans au moins trois plans de rayon (5.1 - 5.5) séparés, dont au moins deux ne sont pas parallèles l'un à l'autre.

12. Procédé selon la revendication 11, **caractérisé en ce que** l'objet (1), pour être radiographié, est transporté à travers les plans de rayon (5.1 - 5.5).

13. Dispositif pour mettre en oeuvre un procédé selon l'une des revendications 1 à 12
- comprenant un dispositif de transport (7) qui mène à travers un tunnel de rayonnement (6),
- des sources de rayons (3.1 - 3.3) disposées autour du dispositif de transport (7), lesquelles délivrent des rayons dans au moins trois plans de rayon (5.1 - 5.5), au moins deux des plans de rayon (5.1 - 5.5) n'étant pas parallèles l'un à l'autre,
- comprenant à chaque fois un arrangement de détecteurs (4.1 - 4.5) associé à chacun des plans de rayon (5.1 - 5.5) et dirigé vers celui-ci et
- comprenant une unité d'interprétation,
**caractérisé en ce que** l'unité d'interprétation contient les moyens suivants :
1. Des moyens pour créer au moins une image bidimensionnelle de l'objet (1) à partir des valeurs d'intensité mesurées,
2. Des moyens pour sélectionner une région de l'espace représentée sur l'image en se basant sur la valeur d'une grandeur de matériau qui est déterminée à partir des mesures des intensités en vue de la contrôler,
3. Des moyens pour déterminer au moins une grandeur géométrique dans l'espace dans la région à contrôler à partir des données de position d'une image bidimensionnelle et à partir des valeurs des intensités en utilisant une valeur mémorisée d'une grandeur spécifique d'un matériau supposé qui influence l'absorption,
4. Des moyens pour déterminer en plus la grandeur géométrique dans l'espace correspondante uniquement à partir des valeurs géométriques tridimensionnelles qui sont déterminées à partir des valeurs mesurées des intensités, et
5. Des moyens pour comparer directement ou indirectement les valeurs déterminées aux étapes 3 et 4 de la grandeur géométrique dans l'espace ou les valeurs d'une grandeur qui en est dérivée afin de définir si le matériau supposé est réellement présent.
